# EUROPÄISCHE PATENTSCHRIFT

(11) **EP 3 140 076 B1**
(45) Veröffentlichungstag und Bekanntmachung des Hinweises auf die Patenterteilung: **08.12.2021**
(21) Anmeldenummer: 15722513.7
(22) Anmeldetag: 07.05.2015
(51) Int. Cl.: B23Q 7/04, B23Q 41/02

(54) **BEARBEITUNGSVORRICHTUNG UND BEARBEITUNGSVERFAHREN**
MACHINING DEVICE AND MACHINING METHOD
DISPOSITIF D'USINAGE ET PROCÉDÉ D'USINAGE

(30) Priorität: 07.05.2014 DE 102014208519
(43) Veröffentlichungstag der Anmeldung: 15.03.2017
(73) Patentinhaber: HOMAG GmbH, 72296 Schopfloch (DE)
(72) Erfinder: FLIK, Markus, 70193 Stuttgart (DE); GRINGEL, Martin, 72479 Strassberg (DE)
(74) Vertreter: Hoffmann Eitle
(86) Internationale Anmeldenummer: PCT/EP2015/060095
(87) Internationale Veröffentlichungsnummer: WO 2015/169918

(56) Entgegenhaltungen:
- EP-A1- 0 185 286
- EP-A1- 1 084 794
- EP-A1- 1 529 606
- EP-A2- 2 095 922
- DE-A1- 2 741 179
- DE-U1- 20 107 571
- DE-U1-202004 009 415
- FR-A1- 2 639 335

## Beschreibung

### TECHNISCHES GEBIET

Die vorliegende Erfindung bezieht sich auf eine Vorrichtung und ein Verfahren zum Bearbeiten eines Werkstücks, das bevorzugt zumindest abschnittsweise aus Holz, Holzwerkstoffen, Kunststoff oder dergleichen besteht.

### STAND DER TECHNIK

Bearbeitungsverfahren in der Möbelindustrie erfordern oft mehrere Bearbeitungsschritte an einem Werkstück, die jeweils durch ein Bearbeitungswerkzeug durchgeführt werden. Dabei gibt es Vorrichtungsausgestaltungen, bei denen diese Bearbeitungswerkzeuge in räumlich voneinander getrennten Bearbeitungsstationen vorgesehen sind. Das Werkstückhandling zwischen den einzelnen Bearbeitungsstationen kann hier durch einen Roboter erfolgen. Das Handling mittels Roboter ermöglicht dabei eine platzsparende sowie kostengünstige Maschinenausgestaltung.

So zeigt die EP 2 095 922 B1 eine Anlage mit einer Werkzeugmaschine, die ein Aggregat zum Werkstückformatieren und ein Aggregat zum Kantenanleimen aufweist, einer räumlich getrennten Bearbeitungsstation zum Bündigfräsen und einem Roboter zum Zuführen eines Werkstücks zu den unterschiedlichen Bearbeitungsstationen, wobei der Roboter ausgestaltet ist, eine Vorschubkomponente während mindestens einer der Bearbeitungen in den Bearbeitungsstationen bereitzustellen.

Die DE 20 2004 011 250 U1 zeigt eine Vorrichtung zum Herstellen von Formteilen mit einer Einrichtung zum Warmformen, einer Zentriereinrichtung und einem Frästisch, wobei all diese durch einen Fräs- und Greifroboter anfahrbar sind DE 20 2004 009415 U1 offenbart eine Vorrichtung mit zwei Bearbeitungsstationen und einer Roboterbaugruppe zum Zuführen eines Werkstücks zu den Bearbeitungsstationen, wobei die Roboterbaugruppe ausgestaltet ist, mindestens zwei Werkstücke gleichzeitig zu halten.

EP1529606 offenbart eine Roboterbaugruppe mit Vakuum-Sauggreifern, die in der Lage ist, zwei Werkstücke gleichzeitig aufzunehmen und zu bewegen.

Die Vorrichtungen und Verfahren im Stand der Technik weisen jedoch die Nachteile einer relativ geringen Kapazität und eines geringen Durchsatzes auf, was in hohen Fertigungszeiten und hohen Stückkosten resultiert.

### DARSTELLUNG DER ERFINDUNG

Es ist daher eine Aufgabe der vorliegenden Erfindung, eine Vorrichtung und ein Verfahren der eingangs genannten Art bereitzustellen, die eine hohe Kapazität und einen hohen Durchsatz ermöglichen.

Der Erfindung liegt der Gedanke zugrunde, dass die geringe Kapazität und der geringe Durchsatz der Vorrichtungen und Verfahren im Stand der Technik vor allem darin begründet liegt, dass die einzelnen Bearbeitungsstationen beziehungsweise die einzelnen Bearbeitungswerkzeuge geringe Produktivität aufweisen. Dies wiederum folgt daraus, dass die durch den Roboter auszuführenden Handlingaufgaben lediglich sequentiell ausführbar sind, da der Roboter im Stand der Technik nicht ausgestaltet und geeignet ist, mehrere Werkstücke gleichzeitig zu halten bzw. zu bewegen. Im Ergebnis stellt der Roboter demnach in der Prozesskette die kritische Größe beziehungsweise den Engpass dar und begrenzt damit den Systemdurchfluss. Ist die Bearbeitung eines Werkstücks beispielsweise auf einer ersten Bearbeitungsstation beendet und soll dieses Werksstück an eine zweite Bearbeitungsstation durch den Roboter weitergegeben werden, so bedarf es in den Vorrichtungen und Verfahren im Stand der Technik vorerst dieser Weitergabe, bevor die erste Bearbeitungsstation mit einem neuen Werkstück durch den Roboter bestückt werden kann. Während dieser Übergabezeit steht die erste Bearbeitungsstation still, was in geringer Produktivität resultiert.

Die erfindungsgemäße Vorrichtung ist im Anspruch 1 definiert. Die Roboterbaugruppe ist dabei ausgestaltet und bevorzugt eingerichtet zwei Werkstücke gleichzeitig zu Halten und/oder zu Bewegen und/oder zu Handhaben. Die Werkstücke sind dabei bevorzugt räumlich voneinander getrennt, was bedeutet, dass diese einander nicht berühren.

Diese erfindungsgemäße Ausgestaltung ermöglicht eine Produktivitätserhöhung der einzelnen Bearbeitungsstationen. Dies minimiert die Stillstandzeit und maximiert die Kapazität sowie den Durchsatz der gesamten Vorrichtung, was wiederum in geringen Stückkosten resultiert. Diese Vorteile werden vor allem dadurch erzielt, dass die Roboterbaugruppe zum Halten und/oder Bewegen und/oder Handhaben von mindestens zwei Werkstücken ausgestaltet und bevorzugt auch eingerichtet ist. Durch die erfindungsgemäße Ausgestaltung kann der Gesamtverstellweg der Roboterbaugruppe für einen Bearbeitungsvorgang verglichen mit den Vorrichtungen und Verfahren im S.d.T. verringert werden. So kann beispielsweise mit der Roboterbaugruppe einer ersten Bearbeitungsstation ein neues Werkstück zugeführt werden, mit der gleichen Baugruppe von dieser Station ein bereits fertigbearbeitetes Werkstück aufgenommen, und das neue Werkstück auf dieser Bearbeitungsstation anschließend abgelegt werden. Während dieses neue Werkstück in dieser Station bearbeitet wird, führt die Roboterbaugruppe das in dieser Station bereits bearbeitete Werkstück einer nächsten Bearbeitungsstation zu. Die deutlich höhere Auslastung der einzelnen Bearbeitungsstationen wird aus diesem Beispiel deutlich. Im Resultat wird der Vorrichtungsoutput signifikant erhöht, was zu geringeren Stückkosten führt. Hier sei ferner darauf hingewiesen, dass bereits geringe Effizienzfortschritte bzw. Kapazitätsfortschritte in der Möbel-Massenfertigung zu signifikanten Wettbewerbsvorteilen und Kosteneinsparungen führen.

Dabei kann die Roboterbaugruppe einen Roboter mit einer Werkstückaufnahmeeinrichtung zum Halten und/oder Bewegen und/oder Handhaben von den zwei oder mehr Werkstücken aufweisen. Diese bevorzugte Ausgestaltung führt zu einer relativ geringen Systemkomplexität mit geringen Kosten. Die Werkstückaufnahmeeinrichtung ist dabei bevorzugt ausgestaltet und/oder die Roboterbaugruppe bevorzugt eingerichtet, die mindestens zwei Werkstücke unabhängig voneinander aufzunehmen und abzulegen. Dies ermöglicht eine besonders hohe Handhabungsvariabilität, was die Möglichkeit einer besonders hohen Kapazität und eines besonders hohen Durchsatzes der Vorrichtung bietet.

Ferner kann die Roboterbaugruppe auch zwei oder mehr Roboter mit jeweils einer Werkstückaufnahme aufweisen. Diese bevorzugte Ausgestaltung ermöglicht dabei eine Entkopplung der Handhabung der mindestens zwei Werkstücke voneinander. Dies resultiert in einer sehr hohen Handhabungsvariabilität und ermöglicht einen sehr hohen Vorrichtungsoutput. Diese bevorzugte Ausgestaltung führt demnach zu besonders geringen Fertigungszeiten und Stückkosten. Dabei ist die Roboterbaugruppe bevorzugt ausgestaltet, die mindestens zwei Werkstücke mit den Werkstückaufnahmen der Roboter unabhängig voneinander aufzunehmen und abzulegen. Dies führt zu einer besonders hohen Handhabungsvariabilität, was in einem besonders hohen Durchsatz resultiert.

Erfindungsgemäß weist die Vorrichtung eine räumlich getrennte dritte und vierte Bearbeitungsstation mit einem Bearbeitungswerkzeug auf, denen mit der Roboterbaugruppe jeweils ein Werkstück zuführbar ist. Durch diese Ausgestaltung wird eine höhere Bearbeitungsvielfalt auf der Vorrichtung bereitgestellt, da so zusätzliche Bearbeitungsschritte in diesen Bearbeitungsstationen bereitgestellt werden können. Dies ermöglicht auch das Bereitstellen eines gesamten Fertigungsprozesses auf einer Vorrichtung. Beispielsweise kann so eine vollständige Kantenbeschichtung inklusive Fügen eines Beschichtungsmaterials, Nachbearbeitung des gefügten Beschichtungsmaterials, z.B. Bündigfräsen, und Aufbereitung der Kante, zum Beispiel Polieren und/oder Etikettieren, auf einer Vorrichtung bereitgestellt werden.

Gemäß einer bevorzugten Ausgestaltung weist eine Bearbeitungsstation eine Beschichtungseinrichtung zum Beschichten eines Werkstücks mit einem Beschichtungsmaterial auf. Insbesondere für die Werkstückbeschichtung eignet sich das erfindungsgemäße Maschinenkonzept, da hier mehrere Bearbeitungsschritte mit verschiedenen Bearbeitungswerkzeugen erforderlich sind, die sich signifikant in deren Bearbeitungszeiten unterscheiden. Durch die erfindungsgemäße Vorrichtung lassen sich die Stillstandzeiten der einzelnen Bearbeitungsstationen trotz der signifikanten Unterschiede in deren Bearbeitungszeiten minimieren. Bevorzugt weist das Beschichtungsaggregat dabei eine Energiequelle auf, die ausgewählt ist aus Laserquelle, LED-Quelle, Heißluftquelle, Ultraschallquelle, UV-Quelle, Infrarotquelle, Mikrowellenquelle und Plasmaquelle. Diese Energiequellen ermöglichen die Aktivierung von Funktionsschichten für die sogenannte Nullfugentechnologie. Demnach kann mit einem derartigen Beschichtungsaggregat eine Beschichtung, die höchsten Ansprüchen genügt, auf der Vorrichtung bereitgestellt werden. Auch können zwei, drei oder vier der Bearbeitungsstationen eine derartige Beschichtungseinrichtung zum Beschichten eines Werkstücks aufweisen. Hier ist es besonders bevorzugt, dass diese Bearbeitungsstationen unterschiedliche Energiequellen aufweisen, um unterschiedliche Beschichtungstechnologien auf einer Vorrichtung bereitzustellen. In einer derartigen Ausgestaltung ist es besonders von Vorteil, dass die verschiedenen Beschichtungstechnologien in Bearbeitungsstationen vorgesehen sind, die räumlich voneinander getrennt sind. Demnach kann ein Interferieren der Einrichtungskomponenten minimiert beziehungsweise unterdrückt werden. Auch wird so ein einfacher Aufbau mit unterschiedlichen Kantenfügetechnologien ermöglicht, da eine gemeinsame komplexe konstruktive Integration in eine Bearbeitungsmaschine durch das räumliche Trennen der Technologien entfällt. Ferner können alle wesentlichen Komponenten der Beschichtungseinrichtung in einer solchen Bearbeitungsstation kompakt integriert werden. Das Bereitstellen von unterschiedlichen Beschichtungstechnologien auf nur einer Vorrichtung ermöglicht auch eine hohe Bearbeitungsvielfalt.

Gemäß einer bevorzugten Ausführungsform ist die Roboterbaugruppe dabei ausgestaltet und bevorzugt auch eingerichtet, eine Relativbewegung zur Bearbeitung eines Werkstücks in mindestens einer der Bearbeitungsstationen herbeizuführen. Dies führt zu einer besonders kostengünstigen Vorrichtung, da so die Roboterbaugruppe auch als Vorschubeinrichtung in mindestens einer der Bearbeitungsstationen eingesetzt werden kann und demnach keine zusätzliche Vorschubeinrichtung erforderlich ist. Insbesondere bei Bearbeitungsschritten, bei denen die Bearbeitungszeit relativ zu den anderen Bearbeitungsstationen recht kurz ist, ermöglicht diese bevorzugte Ausgestaltung einen guten Kompromiss zwischen Kostenersparnis und Vorrichtungsproduktivität. Auch kann mit dieser Ausgestaltung die Produktivität der Roboterbaugruppe maximiert werden. Die Roboterbaugruppe kann auch eingerichtet sein, eine derartige Relativbewegung für zwei, drei oder vier der Bearbeitungsstationen herbeizuführen.

Alternativ oder zusätzlich kann eine der Bearbeitungsstationen auch eine Vorschubeinrichtung zum Herbeiführen einer Relativbewegung zwischen einem Werkstück und dem Bearbeitungswerkzeug der Station zur Werkstückbearbeitung aufweisen. Diese bevorzugte Ausgestaltung ermöglicht eine Entkopplung der Bearbeitung des Werkstücks in der Bearbeitungsstation von der Roboterbaugruppe. Dies bietet sich insbesondere bei Bearbeitungsschritten an, die relativ zu den Schritten der anderen Bearbeitungsstationen zeitlich lang sind, um so die Kapazität der Gesamtvorrichtung zu maximieren. Die Vorschubeinrichtung kann dabei ein Portal mit einem an diesem verstellbaren Bearbeitungswerkzeug aufweisen, welches relativ zu einem bevorzugt örtlich fixierten Werkstück verstellbar ist. Ebenso ist es denkbar, dass das Werkzeug im Wesentlichen stationär angeordnet ist und die Vorschubeinrichtung in Form von beispielsweise einer Werkstückfixiereinrichtung, wie einem Vorschubtisch oder einer Saugtraverse, vorgesehen ist, auf dem das Werkstück fixiert ist, und mit dem eine Relativbewegung zwischen dem stationären Bearbeitungswerkzeug und dem Werkstück zur Werkstückbearbeitung herbeigeführt werden kann. Es ist auch denkbar, dass zwei, drei oder vier der Bearbeitungsstationen eine derartige Vorschubeinrichtung aufweisen. Ebenfalls ist es denkbar, dass eine Relativbewegung zur Werkstückbearbeitung durch solch eine Vorschubeinrichtung und eine Bewegung des Roboters herbeigeführt wird.

Dabei kann eine der Bearbeitungsstationen eine Nachbearbeitungseinrichtung zum Kantennachbearbeiten, insbesondere zum Bündigfräsen eines Kantenüberstands zu einer angrenzenden Werkstückfläche, und/oder eine Etikettiereinrichtung zum Werkstückkennzeichnen, und/oder eine Schleifeinrichtung zum Kantenschleifen, und/oder eine Poliereinrichtung zum Hochglanzpolieren einer Kante, und/oder eine Lasermarkiereinrichtung zum Werkstückkennzeichnen und/oder eine Reinigungseinrichtung zum Werkstückreinigen aufweisen. Auch eine Einrichtung zum Vorbehandeln der Werkstücke ist hier denkbar. Diese bevorzugte Ausgestaltung führt zu einer hohen bzw. vollständigen Integration von einer Schmalflächenbeschichtung in die Vorrichtung und stellt damit eine Schmalflächenbeschichtungsvorrichtung mit einer besonders hohen Kapazität und einem besonders hohen Durchsatz bereit. Ferner lässt sich der gesamte Beschichtungsprozess durch die Roboterbaugruppe in der zuvor beschriebenen Weise optimieren.

Gemäß einer bevorzugten Ausführungsform ist mindestens eine, sind bevorzugt zwei, und besonders bevorzugt alle Bearbeitungswerkzeuge der Bearbeitungsstationen stationär angeordnet. Dies bedeutet, dass die Lage des Werkzeugs bzw. der Rotationsachse des Werkzeugs örtlich fixiert ist. Dies führt zu einer besonders günstigen Maschinenausgestaltung, da die Vorrichtung eine geringe Komplexität aufweist. Das stationäre Vorsehen der Bearbeitungswerkzeuge resultiert hier auch in geringeren Wartungskosten, da keine störungsanfälligen Führungen und Antriebe für die Vielzahl von Werkzeuge vorzusehen sind. Hier können die Bearbeitungswerkzeuge auch derart angeordnet sein, dass das Werkstück durch eine im Wesentlichen tangentiale Bewegung zu einem Kreis um die Roboterbaugruppe bearbeitbar ist. Diese Bearbeitung ist dabei bevorzugt die Bearbeitung, für welche die Bearbeitungsstation spezifisch ausgestaltet ist. Dies führt zu einer besonders einfachen Werkstückzufuhr durch die Roboterbaugruppe zu den Bearbeitungsstationen, was die Zuführzeiten verkürzt und damit die Fertigungszeiten minimiert. Das Resultat ist eine hohe Kapazität und einer hoher Durchsatz der Vorrichtung.

Bevorzugt ist eine der Bearbeitungsstationen zum Zuschneiden und/oder Formatieren eines Werkstücks ausgestaltet. Besonders bevorzugt ist diese Station dabei derart ausgestaltet, dass hier Werkstücke aus einer Rohplatte herausgeschnitten werden können. Durch diese bevorzugte Ausgestaltung wird demnach auch der Werkstückzuschnitt in die produktivitätsoptimierte Vorrichtung integriert. Diese bevorzugte Ausgestaltung führt auch zu einer hohen Bearbeitungsvielfalt, da so auf einfache Weise eine "Losgröße-1" Bearbeitung auf der Vorrichtung ermöglicht wird.

Bevorzugt sind die Bearbeitungsstationen auf einem Kreis um die Roboterbaugruppe und besonders bevorzugt kreissymmetrisch zueinander angeordnet. Die Anordnung auf einem Kreis bzw. die kreissymmetrische Anordnung bedeutet hier, dass das Zentrum der Bearbeitungsstation auf einem dem Kreis bzw. die Zentren der Bearbeitungsstationen kreissymmetrisch zueinander angeordnet sind. Hier sind auch weitere, z.B. eine rechteckige oder polygonale, Anordnung denkbar. Die kreissymmetrische Ausgestaltung minimiert jedoch die Verstellwege zwischen einzelnen Bearbeitungsstationen und daher die Beförderungszeiten des Werkstücks von einer Bearbeitungsstation zur nächsten. Die Ausgestaltung führt demnach zu einer besonders kompakten und zeiteffizienten Vorrichtung. Die geringen Verstellwege resultieren auch in geringen Fertigungszeiten und Stückkosten. Alternativ ist auch eine Anordnung der Bearbeitungsstationen auf einer oder mehreren Linie(n) denkbar, bei welcher die Roboterbaugruppe translatorisch entlang dieser Linie(n) verfahrbar ist.

Eine, mehrere und bevorzugt alle der Bearbeitungsstationen können dabei eine Schnittstelle aufweisen, über welche ein entsprechendes Bearbeitungswerkzeug der Station einwechselbar beziehungsweise einkoppelbar mit dieser verbindbar ist.

In einer weiteren Zielsetzung stellt die vorliegende Erfindung ein Verfahren nach Anspruch 6 bereit.

Das Verfahren erfolgt dabei unter Verwendung einer zuvor beschriebenen Vorrichtung.

Das Verfahren umfasst in dieser Reihenfolge das Aufnehmen eines ersten Werkstücks mit einer Roboterbaugruppe, das Aufnehmen eines zweiten Werkstücks mit der Roboterbaugruppe, wobei das zweite Werkstück bevorzugt von einer ersten Bearbeitungsstation aufgenommen wird, und das Übergeben des ersten Werkstücks an eine erste Bearbeitungsstation, die ein Bearbeitungswerkzeug aufweist. Für die Vorteile dieses Verfahrens wird auf die Vorteile der entsprechenden zuvor beschriebenen Vorrichtung verwiesen. Ferner kann das Verfahren das Bearbeiten des ersten Werkstücks in der ersten Bearbeitungsstation und das bevorzugt zumindest teilweise zeitparallele Zuführen des zweiten Werkstücks zu einer zweiten Bearbeitungsstation, die ein Bearbeitungswerkzeug aufweist, mit der Roboterbaugruppe umfassen. Vorteilhafterweise kann hier während des Zuführens des zweiten Werkstücks zu der zweiten Bearbeitungsstation in der ersten Bearbeitungsstation bereits das nächste Werkstück bearbeitet werden. Dementsprechend wird die Produktivität der ersten Bearbeitungsstation maximiert, was zu einem hohen Vorrichtungsoutput führt.

Auch kann das Verfahren das Bearbeiten des ersten Werkstücks in der ersten Bearbeitungsstation umfassen, indem mit einer Vorschubeinrichtung der ersten Bearbeitungsstation eine Relativbewegung zwischen dem Bearbeitungswerkzeug der ersten Bearbeitungsstation und dem ersten Werkstück herbeigeführt wird. Wie bereits zuvor beschrieben, ermöglicht dies eine Entkopplung der Roboterbaugruppe von der Werkstückbearbeitung in der ersten Bearbeitungsstation. Auch dies ermöglicht einen höheren Durchsatz der Vorrichtung und damit geringe Stückkosten.

Auch kann das Verfahren das Bearbeiten des zweiten Werkstücks in einer zweiten Bearbeitungsstation, die ein Bearbeitungswerkzeug aufweist, umfassen, indem mit der Roboterbaugruppe eine Relativbewegung zwischen dem Bearbeitungswerkzeug der zweiten Bearbeitungsstation und dem zweiten Werkstück herbeigeführt wird. Hier wird auf die entsprechenden Vorteile der zuvor beschriebenen Vorrichtung verwiesen.

### KURZE BESCHREIBUNG DER ZEICHNUNGEN

Fig. 1 zeigt eine isometrische Ansicht eine Fertigungszelle gemäß einer ersten bevorzugten Ausführungsform beim Bestücken einer ersten Bearbeitungsstation.
Fig. 2 zeigt eine isometrische Ansicht der Fertigungszelle der ersten bevorzugten Ausführungsform bei der Werkstückbearbeitung in einer zweiten Bearbeitungsstation.
Fig. 3 zeigt eine schematische Ansicht eines Fertigungszellenclusters einer zweiten bevorzugte Ausführungsform der Erfindung, bei der eine Vielzahl von Fertigungszellen gemäß der ersten bevorzugten Ausführungsform nebeneinander angeordnet sind.
Fig. 4 zeigt eine schematische Ansicht einer Vorrichtung einer dritten bevorzugte Ausführungsform der Erfindung.

### DETAILLIERTE BESCHREIBUNG BEVORZUGTER AUSFÜHRUNGSFORMEN

Im Folgenden werden bevorzugte Ausführungsformen der vorliegenden Erfindung unter Bezugnahme auf die begleitenden Zeichnungen beschrieben. Einzelne und mehrere Merkmale der verschiedenen Ausführungsformen können untereinander kombiniert werden, um neue Ausführungsformen auszubilden. Auch können die Ausführungsformen jeweils miteinander kombiniert werden, um weitere Ausführungsformen auszubilden.

Die im Folgenden beschriebenen Ausführungsformen eignen sich bevorzugt zum Bearbeiten von Werkstücken, die zumindest abschnittsweise aus Holz, Holzwerkstoffen, Kunststoff oder dergleichen ausgebildet sind, wie sie beispielsweise im Bereich der Möbel- und Bauelementeindustrie zum Einsatz kommen. Dabei kann es sich beispielsweise um Massivholz- oder Spannplatten, Leichtbauplatten, Sandwichplatten oder dergleichen handeln. Hier sei jedoch darauf hingewiesen, dass die Ausführungsformen nicht auf die Bearbeitung derartiger Materialien und Werkstücke beschränkt sind.

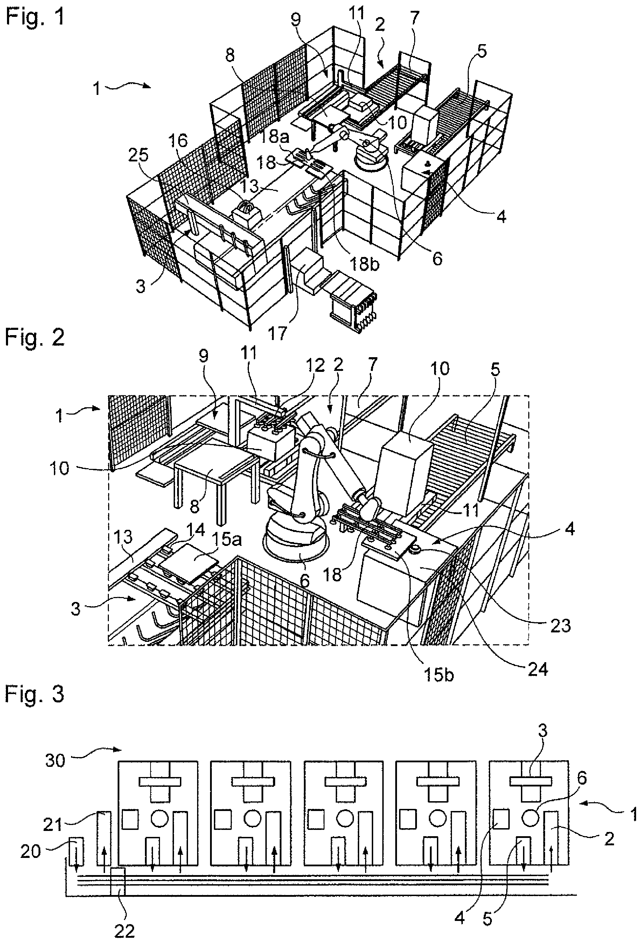

Die in Figs. 1 und 2 gezeigte Fertigungszelle 1 der ersten bevorzugten Ausführungsform umfasst im Wesentlichen fünf räumlich getrennt voneinander vorgesehene Einrichtungen: Eine Werkstückzufuhr 2, eine Beschichtungseinrichtung 3, eine Nachbearbeitungseinrichtung 4, eine Werkstückabfuhr 5 sowie ein Roboter 6. Selbstverständlich kann die Fertigungszelle 1 auch noch weitere Einrichtungen aufweisen. Ebenso ist es nicht erforderlich, dass die Zelle 1 alle der zuvor aufgezählten Einrichtungen umfasst.

Die Werkstückzufuhr 2 weist bevorzugt eine Fördereinrichtung 7, eine Werkstückablage 8 und eine Werkstückbewegungseinrichtung 9 auf. Hier sei jedoch darauf hingewiesen, dass insbesondere die Werkstückablage 8 und die Werkstückbewegungseinrichtung 9 fakultative Merkmale für die Ausführungsform sind. Die Fördereinrichtung 7 ist in dieser bevorzugten Ausgestaltung in Form von Förderrollen ausgebildet, mit denen ein Werkstück bzw. eine Palette mit bevorzugt einer Vielzahl von Werkstücken 10 in die Fertigungszelle 1 beförderbar ist. Die Werkstückablage 8 ist bevorzugt in Förderrichtung der Fördereinrichtung 7 hinter der Fördereinrichtung 7 angeordnet. Hier sind selbstverständlich auch alternative oder zusätzliche Fördereinrichtungen denkbar, z.B. ein Förderband, ein Kran und/oder weitere. Die Werkstückablage 8 ist zwischen der Fördereinrichtung 7 und der Beschichtungseinrichtung 3 angeordnet und zum Aufnehmen eines Werkstücks 15a ausgestaltet. Hier ist die Ablage 8 als Ablagetisch ausgebildet. Die Werkstückbewegungseinrichtung 9 umfasst in dieser bevorzugten Ausführungsform einen Ausleger 11 mit einer Werkstückaufnahme 12. Die Werkstückaufnahme 12 ist bevorzugt in Form von Vakuum-Saugspannern ausgestaltet. Selbstverständlich sind hier auch alternative oder zusätzliche Aufnahmemechanismen denkbar. Die Werkstückbewegungseinrichtung 9 ist so ausgebildet, dass mit dieser ein Werkstück von der Fördereinrichtung 7 der Werkstückablage 8 zuführbar ist. Bevorzugt weist die Einrichtung 9 dafür mindestens zwei senkrecht zueinander vorgesehene translatorische Führungen und Antriebe zum Bewegen der Werkstückaufnahme 12 entlang dieser Führungen auf.

Die Beschichtungseinrichtung 3 ist in dieser bevorzugten Ausführungsform als Stationärmaschine ausgestaltet. Dies bedeutet, dass eine Relativbewegung zum Bearbeiten des Werkstücks zwischen Werkzeug und Werkstück vor allem durch die Bewegung des Werkzeugs herbeigeführt wird und das Werkstück bevorzugt örtlich fixiert wird. Die Beschichtungseinrichtung 3 weist bevorzugt einen Bearbeitungstisch 13 auf, auf dem mittels Vakuum-Saugspannern 14 ein Werkstück 15a fixierbar ist. Die Vakuum-Saugspanner sind dabei bevorzugt so vorgesehen, dass mit diesen Werkstücke verschiedener Größen sicher fixiert werden können. Auch können diese derart vorgesehen sein, dass mehrere Werkstücke zur gleichen Zeit auf dem Tisch 13 fixiert werden können. Selbstverständlich sind anstatt der Vakuum-Saugspanner 14 auch zusätzliche oder alternative Einrichtungen zum Fixieren eines oder mehrerer Werkstücke denkbar. Darüber hinaus umfasst die Beschichtungseinrichtung 3 ein entlang des Tisches 13 verfahrbares Portal 25 und/oder einen derart verfahrbaren Ausleger, ein entlang des Portals und/oder des Auslegers quer zum Werktisch 13 verfahrbaren Schlitten 16 sowie ein am Schlitten 16 vorgesehenes nicht gezeigtes Beschichtungsaggregat. Das Beschichtungsaggregat ist dabei bevorzugt um die C-Achse rotierbar am Schlitten 16 angebracht. Ferner ist das Beschichtungsaggregat bevorzugt über den Schlitten 16 in der Höhe relativ zum Tisch 13 verfahrbar. Die Beschichtungseinrichtung 3 umfasst ferner bevorzugt eine Beschichtungsmaterialzufuhr 17, mittels der dem Beschichtungsaggregat, welches an dem Portal 25 und/oder dem Ausleger vorgesehen ist, unterschiedliche Beschichtungsmaterialien zuführbar sind. Die Beschichtungseinrichtung 3 ist derart ausgestaltet, dass diese der Beschichtungszufuhr 17 ein Beschichtungsmaterial mit dem Beschichtungsaggregat entnehmen kann. Ferner ist die Einrichtung 3 derart ausgestaltet, dass diese mit dem Beschichtungsaggregat und dem aus der Beschichtungszufuhr 17 entnommenen Beschichtungsmaterial eine oder mehrere Flächen eines Werkstücks 15a beschichten kann, welches auf dem Bearbeitungstisch 13 fixiert ist. Dabei ist die Einrichtung 3 dieser Ausführungsform derart ausgestaltet, dass die Beschichtung durch eine Bewegung des Beschichtungsaggregats entlang der zu beschichtenden Schmalfläche des Werkstücks 15a erfolgt. Ferner ist es auch vorstellbar, dass die Beschichtungseinrichtung 3 mehrere Portale und/oder Ausleger umfasst, die bevorzugt jeweils ähnlich oder identisch zu dem zuvor beschriebenen Portal 25 ausgestaltet sind. Dies ermöglicht eine gleichzeitige Beschichtung von mehreren Werkstücken, was den "Output" der Maschine erhöht. Alternativ oder zusätzlich ist es auch vorstellbar, an dem Portal 25 und/oder dem Ausleger mehrere Schlitten 16 mit jeweils einem oder mehreren Beschichtungsaggregaten vorzusehen. Auch dies ermöglicht einen höheren Durchsatz der Fertigungszelle 1.

Die Einrichtung 3 ist nicht auf die hier beschriebene bevorzugte Ausgestaltung beschränkt. Alternativ oder zusätzlich kann beispielsweise auch die Beschichtungseinrichtung 3 als Durchlauftechnik ausgestaltet sein. Dabei ist das Werkzeug, hier das Beschichtungsaggregat, im Wesentlichen stationär angeordnet und das Werkstück wird mittels einer Vorschubeinrichtung relativ zum Werkzeug bewegt. Eine derartige Ausgestaltung ist beispielsweise in DE 199 55 575 B4 oder EP 2 191 947 B1 beschrieben. Bevorzugt weist die Beschichtungseinrichtung hier einen Verstelltisch (z.B. einen X-Y-Tisch) auf, auf dem das Werkstück fixierbar ist. Der Tisch ist dabei so ausgestaltet, dass dieser mittels eines Antriebs relativ zum stationären Werkzeug bewegt werden kann. Alternativ oder zusätzlich ist es auch denkbar, dass der im Folgenden beschriebene Roboter 6 eine Relativbewegung zwischen dem Beschichtungsaggregat der Einrichtung 3 und dem Werkstück herbeiführen kann und/oder das Werkstück hält während das Beschichtungsaggregat relativ zum vom Roboter gehaltenen Werkstück bewegt wird.

Das Beschichtungsmaterial kann aus unterschiedlichen Materialien bestehen, wie beispielsweise Kunststoff, Furnier, Papier, Pappe, Metall etc. und vielfältigen Kombinationen hiervon. Dabei kann das Beschichtungsmaterial in Rollenform aber auch in Form von Einzelabschnitten vorgesehen sein. Ferner kann das Beschichtungsmaterial eine Funktionsschicht aufweisen, die durch Energieeintrag haftende Eigenschaften entfaltet, sodass das Beschichtungsmaterial an das Werkstück über die Funktionsschicht gefügt werden kann. Dabei kann die Funktionsschicht Mittel zur Erhöhung der Wärmeleitfähigkeit, wie beispielsweise Polyolefine und/oder Metallpartikel, aufweisen. Ferner kann die Funktionsschicht Absorber für Laserlicht oder andere Strahlungsformen aufweisen. Alternativ oder zusätzlich kann die Funktionsschicht auch separat zwischen Beschichtungsmaterial und Werkstück zugeführt werden, oder bereits auf der zu beschichtenden Oberfläche des Werkstücks vorgesehen sein.

Das Beschichtungsaggregat der Beschichtungseinrichtung 3 umfasst bevorzugt eine Andruckeinrichtung, wie beispielsweise eine Andruckrolle und/oder einen Andrückschuh, mit der ein Beschichtungsmaterial an eine zu beschichtende Oberfläche eines Werkstücks andrückbar ist. Ferner umfasst das Beschichtungsaggregat eine Energiequelle, die bevorzugt ausgewählt ist aus Laserquelle, Infrarotquelle, Ultraschallquelle, Magnetquelle, Mikrowellenquelle, Plasmaquelle, Heißgasquelle oder weiteren. Auch eine Kombination dieser ist denkbar. Die Energiequelle kann dabei in dem Beschichtungsaggregat oder aber auch außerhalb des Beschichtungsaggregats vorgesehen sein. Die Energiequelle ist ausgestaltet, einer Funktionsschicht zum Fügen eines Beschichtungsmaterials an ein Werkstück Energie zuzuführen, welche die haftenden Eigenschaften der Schicht hervorbringt. Alternativ oder zusätzlich ist auch eine Energiequelle zum Aufschmelzen eines Schmelzklebers denkbar, mittels dem ein Beschichtungsmaterial an ein Werkstück gefügt werden kann. Das Beschichtungsaggregat kann in der Beschichtungseinrichtung 3 austauschbar vorgesehen sein, um so auf einfache Weise verschiedene Beschichtungstechnologien durch den Austausch des Beschichtungsaggregats auf der Einrichtung 3 bereitstellen zu können. Auch ist es denkbar, dass die Einrichtung 3 mehrere Schnittstellen zum Aufnehmen von verschiedenen Beschichtungsaggregaten aufweist. So können auf einer Vorrichtung mehrere Beschichtungstechnologien bereitgestellt werden.

Die Nachbearbeitungseinrichtung 4 dieser ersten bevorzugten Ausführungsform weist eine Einrichtung zum Bündigfräsen 23 und einen Bearbeitungstisch 24 auf, auf dem die Einrichtung 23 bevorzugt mittig angeordnet ist. Die Einrichtung zum Bündigfräsen 23 umfasst bevorzugt ein nicht gezeigtes Fräswerkzeug mit einer Rotationsachse, die bevorzugt orthogonal zur Auflagefläche des Tisches 24 angeordnet ist. Die Einrichtung 23 ist ferner ausgestaltet, einen Überstand eines an ein Werkstück gefügten Beschichtungsmaterials bündig mit einer angrenzenden Werkstückfläche zu fräsen. Selbstverständlich sind hier auch andere Werkzeuge denkbar. Ferner sind hier zusätzlich oder alternativ auch andere Einrichtungen in der Nachbearbeitungseinrichtung 4 denkbar. Beispielsweise kann die Nachbearbeitungseinrichtung eine Vorrichtung zum Etikettieren eines Werkstücks, eine Vorrichtung mit einem Schleifwerkzeug zum Schleifen eines Werkstücks oder eine Vorrichtung zum Beschichten eines Werkstücks aufweisen. Solch eine Vorrichtung zum Beschichten kann dabei gemäß der zuvor beschriebenen Beschichtungseinrichtung 3 ausgestaltet sein. Auch Kombinationen dieser sind denkbar.

Die Werkstückabfuhr 5 ist in dieser bevorzugten Ausführungsform durch Förderrollen ausgebildet, mit denen ein Werkstück und/oder eine Palette mit einer Vielzahl von Werkstücken 10 aus der Fertigungszelle 1 heraus beförderbar ist. Selbstverständlich sind hier auch andere Ausgestaltungen der Werkstückabfuhr 5, wie sie z.B. in Verbindung mit der Zufuhr 2 beschrieben wurden, denkbar.

In der Fertigungszelle 1 dieser ersten bevorzugten Ausführungsform sind die Einrichtungen 2, 3, 4 und 5 bevorzugt um den Roboter 6 herum angeordnet. Dabei befinden sich die Werkstückzufuhr 2 und die Werkstückabfuhr 5 auf der gleichen Seite der Fertigungszelle 1 und sind ferner bevorzugt im Wesentlichen parallel zueinander vorgesehen. Die Beschichtungseinrichtung 3 befindet sich auf der Seite der Fertigungszelle 1, die der Werkstückzufuhr 2 gegenüberliegt. Die Nachbearbeitungseinrichtung 4 befindet sich an einer dritten Seite der Fertigungszelle 1, die näher an der Werkstückabfuhr 5 als an der Werkstückzufuhr 2 angeordnet ist. Alle Einrichtungen 2, 3, 4 und 5 sind dabei so angeordnet, dass denen jeweils mit dem Roboter 6 ein Werkstück zuführbar und/oder entnehmbar ist.

Der im Wesentlichen zentral in der Fertigungszelle 1 angeordnete Roboter 6 ist in dieser bevorzugten Ausführungsform bevorzugt ein herkömmlicher 6-Achs-Industrieroboter mit einer am Roboterkopf angeordneten Werkstückaufnahmetraverse 18, die bevorzugt in der Draufsicht rechteckig ausgestaltet ist. Dabei weist die Traverse 18 an deren Unterseite, also an der dem Roboterarm abgewandten Seite, Vakuum-Sauggreifer zur Aufnahme eines Werkstücks auf. Hier sind insgesamt 12 derartiger Sauggreifer vorgesehen, die in einem gleichmäßigen Raster an der Traverse 18 angeordnet sind. Der Roboter ist dabei derart ausgestaltet und/oder eingerichtet, dass dieser mit den Vakuum-Sauggreifern in der Lage ist, zwei Werkstücke gleichzeitig aufzunehmen und zu bewegen. Dies wird in dieser bevorzugten Ausführungsform dadurch ermöglicht, dass die Sauggreifer in Gruppen ansteuer- bzw. aktivierbar sind. So weist die Traverse 18 bevorzugt zwei Sauggreifergruppen 18a und 18b auf, die jeweils zur Aufnahme eines Werkstücks ausgestaltet sind und sechs benachbarte Sauggreifer aufweisen. Selbstverständlich sind hier auch mehr oder weniger Sauggreifer bzw. Sauggreifergruppen denkbar. Ebenso ist es denkbar, dass die Werkstückaufnahmetraverse 18 auf zwei gegenüberliegenden Seiten Vorkehrungen zum Aufnehmen und Befestigen von zwei Werkstücken aufweist, und die Traverse bevorzugt um 180° um eine Symmetrieachse der Traverse schwenkbar ausgestaltet ist. Die Saugtraverse kann dabei auch auswechselbar vorgesehen sein. Ebenso kann der Roboter 6 ausgestaltet sein, Einrichtungen zum Bohren, Dübeln, Beschlagsetzen, Fräsen, Barcodescannnen und/oder Weitere aufzuweisen. Diese Einrichtungen und der Roboter sind dabei bevorzugt derart ausgestaltet, dass diese in den Roboter einwechselbar sind. Auch kann der Roboter 6 so ausgestaltet sein, dass dieser mehrere derartiger Einrichtungen gleichzeitig aufnehmen kann. Der Roboter 6 kann auch Einrichtungen aufweisen, die zum Bedrucken von Werkstücken eingerichtet und/oder ausgestaltet oder zum Reinigen von Teilen der Fertigungszelle 1 einsetzbar sind. Ferner kann die Fertigungszelle 1 eine zusätzliche Station zum Weiterverarbeiten von Restteilen beziehungsweise Werkstückverschnitten aufweisen. Darüber hinaus kann der Roboter 6 Sensoren oder sonstige Einrichtungen aufweisen, mit denen eine Werkstücktrajektorie regelbar ist. Der Roboter 6 kann auch Sensoren aufweisen, die zum Vorbeugen einer Kollision des Roboters mit einem Objekt der Fertigungszelle 1 und/oder einer Person einsetzbar sind.

Ferner weist die Fertigungszelle 1 eine nicht gezeigte Steuerung auf, die eingerichtet ist, zumindest einen oder mehrere Schritte des folgenden Verfahrens auszuführen. Mit der Steuerung sind dabei bevorzugt alle Antriebe der Fertigungszelle der unterschiedlichen Einrichtungen, insbesondere jedoch der Roboter 6, verbunden. Der Fertigungszelle 1 wird über die Fördereinrichtung 7 der Werkstückzufuhr 2 eine Palette mit einer Vielzahl von Werkstücken 10 zugeführt. Die Werkstückbewegungseinrichtung 9 nimmt mit deren Saugtraverse 12, die an dem Portal 11 angebracht ist, ein Werkstück von dieser Vielzahl von Werkstücken 10 von der Palette auf, befördert diese zu der Werkstückablage 8, und legt dieses Werkstück auf der Werkstückablage 8 ab. Währenddessen wird ein weiteres Werkstück 15a in der Beschichtungseinrichtung 3 beschichtet. Der Roboter 6 nimmt mit der ersten Sauggreifergruppierung 18a der Werkstückaufnahmetraverse 18 das Werkstück von der Werkstückablage 8 auf und führt dieses der Beschichtungseinrichtung 3 zu. Bevor das Werkstück von der ersten Gruppierung 18a der Saugtraverse 18 auf der Einrichtung 3 abgelegt wird, nimmt der Roboter 6 mit der zweiten Gruppierung 18b der Saugtraverse 18 das auf der Einrichtung 3 zuvor fertig beschichtete Werkstück auf, siehe Fig. 1. Während des Aufnehmens wird das Werkstück mit der ersten Saugtraverse 18a noch gehalten. Anschließend legt der Roboter das von der Werkstückablage 8 aufgenommene Werkstück auf der Beschichtungseinrichtung 3 ab. Daraufhin wird das auf der Beschichtungseinrichtung abgelegte Werkstück mit dem Beschichtungsaggregat der Beschichtungseinrichtung 3 beschichtet, während der Roboter 6 das mit der zweiten Gruppierung 18b der Saugtraverse 18 aufgenommene zweite Werkstück, welches zuvor in der Einrichtung 3 beschichtet wurde, dem Nachbearbeitungsaggregat 4 zuführt. In dem Nachbearbeitungsaggregat 4 wird das Werkstück durch den Roboter 6 entlang des stationär angeordneten Fräswerkzeugs des Aggregats 4 geführt, um einen Kantenüberstand des in der Einrichtung 3 angeleimten Beschichtungsmaterials zu der angrenzenden Werkstückfläche planzufräsen. Dabei bewegt der Roboter 6 das Werkstück auf solch einer Trajektorie, dass alle zuvor beschichteten Flächen des Werkstücks plangefräst werden. In dem in Fig. 2 dargestellten Beispiel wird nachdem eine erste Schmalfläche plangefräst wurde, das Werkstück anschließend durch den Roboter 6 und die Traverse 18 um 90° gedreht, um die benachbarte Schmalfläche des Werkstücks entlang des Nachbearbeitungsaggregats zum Planfräsen zu führen. Dieser Schritt wird für die weiteren Schmalflächen ebenfalls durchgeführt. Nachdem alle beschichteten Flächen des Werkstücks in dem Nachbearbeitungsaggregat 4 nachbearbeitet wurden, befördert der Roboter 6 das nachbearbeitete Werkstück zu der Werkstückabfuhr 5 und stapelt dieses auf der Fertigteilpalette 11. In der Zwischenzeit hat die Werkstückbewegungseinrichtung 9 bereits ein weiteres Werkstück von der Vielzahl von Werkstücken 10 auf der Werkstückablage 8 abgelegt. Dieses Werkstück wird in einem nächsten Schritt vor dem Roboter 6 mit der ersten Gruppe von Sauggreifern 18a der Saugtraverse 18 aufgenommen und der zuvor beschriebene Verfahrensablauf wird wiederholt. Die Steuerung ist ferner bevorzugt eingerichtet, diese Abläufe zeiteffizient auszuführen und die Stillstandzeiten von einzelnen Einrichtungen zu minimieren.

Fig. 3 zeigt eine zweite bevorzugte Ausführungsform der vorliegenden Erfindung. In dieser zweiten bevorzugten Ausführungsform sind eine Vielzahl von Fertigungszellen 1, die in der ersten bevorzugten Ausführungsform beschrieben wurden, nebeneinander zu einem Fertigungszellencluster 30 angeordnet. Diese Fertigungszellen 1 sind dabei bevorzugt identisch zueinander ausgestaltet. Es ist jedoch auch denkbar, dass die Fertigungszellen jeweils verschiedene Ausgestaltungen aufweisen. Für die Ausgestaltungen der einzelnen Fertigungszellen wird auf die Beschreibung der ersten bevorzugten Ausführungsform verwiesen. Darüber hinaus umfasst die zweite bevorzugte Ausführungsform eine Rohteilzufuhr 20 und einen Fertigteilabtransport 21, die nebeneinander an einer Stirnseite des Fertigungszellenclusters 30 angeordnet sind. Darüber hinaus weist der Fertigungszellencluster 30 eine Fertigungszellenbestückung 22 auf, über welche Rohteile von der Rohteilzufuhr 20 den einzelnen Fertigungszellen und Fertigteile von den einzelnen Fertigungszellen dem Fertigteilabtransport 21 zugeführt werden können. Der Fertigungszellencluster 30 ist dabei derart ausgestaltet, dass die Fertigteilzufuhr 20 den einzelnen Fertigungszellen 1 Rohteile bevorzugt in Form von Paletten mit einer Vielzahl von aufeinander gestapelten Rohteilen zugeführt. Die Fertigungszellenbestückung 22 ist ebenfalls ausgestaltet, eine Fertigteilpalette mit einer Vielzahl gestapelter Fertigteile, wie durch Bezugszeichen 11 in Fig. 2 gezeigt, dem Fertigteilabtransport 21 zuzuführen. Bevorzugt weist auch die zweite bevorzugte Ausführungsform eine Steuereinrichtung auf, die eingerichtet ist, ein Verfahren gemäß dem zuvor im Rahmen der ersten Ausführungsform beschriebenen Verfahren für jede der Fertigungszellen auszuführen. Die Steuereinrichtung ist ferner bevorzugt eingerichtet, die Rohteilzufuhr 20, den Fertigteilabtransport 21 sowie die Fertigungszellenbestückung 22 zu steuern. Die Steuerung ist ferner bevorzugt eingerichtet, diese Abläufe zeiteffizient auszuführen und die Stillstandzeiten von einzelnen Einrichtungen zu minimieren. Der Vorteil dieser zweiten bevorzugten Ausführungsform liegt in der Parallelisierung von Fertigungsabläufen, was einen hohen "Output" ermöglicht und zu einer zeit- und kosteneffizienten Fertigung führt, die sich in geringen Stückkosten wiederspiegelt.

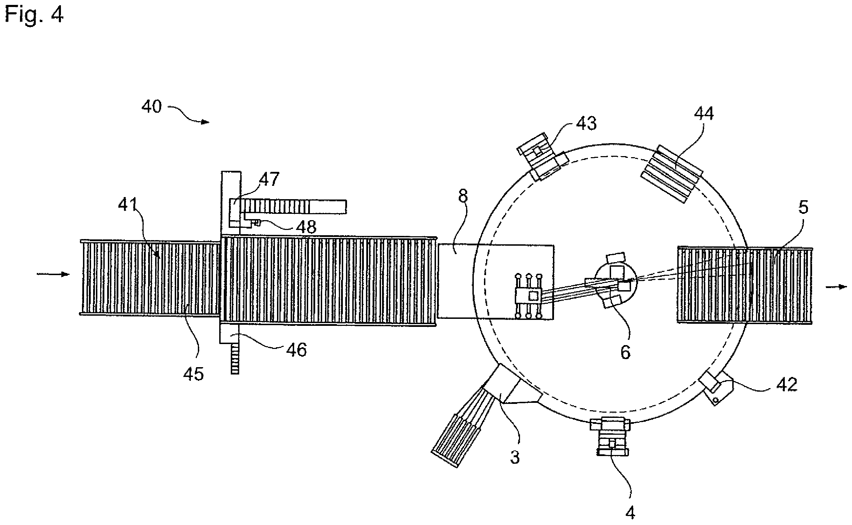

Fig. 4 zeigt eine dritte bevorzugte Ausführungsform der vorliegenden Erfindung. In der folgenden Beschreibung werden gleiche Bauteile wie jene in den zuvor beschriebenen Ausführungsformen mit den gleichen Bezugszeichen gekennzeichnet. Für die Ausgestaltungsmöglichkeiten dieser Bauteile und Einrichtungen wird auf die Ausführungen in den ersten und zweiten bevorzugten Ausführungsform verwiesen. Die folgende Beschreibung konzentriert sich demnach im Wesentlichen auf die Unterschiede der dritten bevorzugten Ausführungsform zu den zuvor beschriebenen Ausführungsformen.

Die Vorrichtung 40 der dritten bevorzugten Ausführungsform weist im Wesentlichen acht verschiedene von einander räumlich getrennte Einrichtungen auf: Eine Zuschnitteinrichtung 41, eine Beschichtungseinrichtung 3, eine Nachbearbeitungseinrichtung 4, eine Etikettiereinrichtung 42, eine Schleifeinrichtung 43, eine Werkstückabfuhr 5, eine Werkstückstapelung 44 und einen Roboter 6. Hinsichtlich der Ausgestaltungen der Beschichtungseinrichtung 3, der Nachbearbeitungseinrichtung 4, der Werkstückabfuhr 5 und des Roboters 6 wird auf die Ausführungen der ersten und zweiten bevorzugten Ausführungsform verwiesen.

Die Zuschnitteinrichtung 41 weist eine Fördereinrichtung 45 auf, die durch Förderrollen ausgestaltet ist. Hier sind jedoch auch Förderbänder oder sonstige Einrichtungen zum translatorischen Befördern eines Werkstücks denkbar. Ferner umfasst die Zuschnitteinrichtung 41 ein entlang der Fördereinrichtung 45 verfahrbares Portal 46, welches einen entlang des Portals verstellbaren Schlitten 47 mit einem Zuschnittaggregat 48 aufweist. Das Zuschnittaggregat 48 ist bevorzugt ferner in die Höhenrichtung der Anlage verstellbar, sodass dieses in alle drei Raumrichtungen translatorisch bewegt werden kann. In Förderrichtung ist anschließend an die Fördereinrichtung 45 eine Werkstückablage 8 vorgesehen, die im Zugriffsbereich des Roboters 6 liegt. Die Zuschnitteinrichtung 41 ist dabei derart ausgestaltet, dass Werkstücke mit dieser aus einer Werkstückplatte auf eine gewünschte Größe zugeschnitten werden können. Die zugeschnittenen Werkstücke sind dabei durch die Fördereinrichtung 45 auf die Werkstückablage 8 beförderbar. Alternativ oder zusätzlich kann statt der Zuschnitteinrichtung auch eine Einrichtung zum Formatieren und/oder Bohren und/oder einer sonstigen Bearbeitung vorgesehen sein.

Die Werkstückablage 8, die Beschichtungseinrichtung 3, die Nachbearbeitungseinrichtung 4, die Etikettiereinrichtung 42, die Werkstückabfuhr 5, die Werkstückstapelung 44 und die Schleifeinrichtung 43 sind bevorzugt im Wesentlichen kreissymmetrisch zueinander um den Roboter 6 herum angeordnet.

Die dritte bevorzugte Ausführungsform weist ferner eine Steuereinrichtung auf, mit der bevorzugt alle Antriebe und Einrichtungen der dritten bevorzugten Ausführungsform verbunden sind. Bevorzugt ist die Steuereinrichtung ausgestaltet und eingerichtet zumindest einige Schritte des folgenden Verfahrens auszuführen. Über die Fördereinrichtung 45 wird der Zuschnitteinrichtung 41 eine Werkstückplatte als Rohmaterial zugeführt. Diese wird mittels des Zuschnittaggregats 48 in der Zuschnitteinrichtung 41 in einzelne Werkstücke unterteilt. Die einzelnen Werkstücke werden bevorzugt nacheinander der Werkstückablage 8 zugeführt. Hier nimmt eine erste Werkstückaufnahme des Roboters 6 das Werkstück auf und befördert dieses zu der Beschichtungseinrichtung 3. Vor dem Ablegen des Werkstücks auf der Beschichtungseinrichtung 3 wird mit einer zweiten Werkstückaufnahme des Roboters ein bereits fertig beschichtetes Werkstück von der Beschichtungseinrichtung 3 aufgenommen. Anschließend wird das von der Werkstückablage 8 aufgenommene Werkstück auf der Beschichtungseinrichtung 3 abgelegt. Das vom Roboter von der Beschichtungseinrichtung 3 aufgenommene Werkstück wird anschließend durch den Roboter zu der Nachbearbeitungseinrichtung 4 hin geführt und durch diese hindurch geführt, was bevorzugt analog zu der ersten Ausführungsform erfolgt. Anschließend wird das nachbearbeitete Werkstück bevorzugt in der Etikettiereinrichtung 42 etikettiert und/oder in der Schleifeinrichtung 43 geschliffen, um danach der Werkstückabfuhr 5 oder der Werkstückstapelung 44 zugeführt zu werden.

## Patentansprüche

1. Vorrichtung (1; 30; 40) zum Bearbeiten eines Werkstücks, das bevorzugt zumindest abschnittsweise aus Holz, Holzwerkstoffen, Kunststoff oder dergleichen besteht, mit:
einer ersten Bearbeitungsstation (3) mit einem Bearbeitungswerkzeug zum Bearbeiten eines Werkstücks,
einer von der ersten räumlich getrennten zweiten Bearbeitungsstation (4) mit einem Bearbeitungswerkzeug zum Bearbeiten eines Werkstücks,
einer Roboterbaugruppe (6) zum Zuführen eines Werkstücks zu der ersten (3) und zweiten Bearbeitungsstation (4), wobei die Roboterbaugruppe (6) ausgestaltet und bevorzugt eingerichtet ist, mindestens zwei Werkstücke (15a, 15b) gleichzeitig zu halten,
wobei die Roboterbaugruppe einen Roboter (6) mit einer Werkstückaufnahmetraverse (18) aufweist, die an deren Unterseite Vakuum-Sauggreifer aufweist, wobei der Roboter derart ausgestaltet und/oder eingerichtet ist, dass der Roboter mit den Vakuum-Sauggreifern in der Lage ist, zwei Werkstücke gleichzeitig aufzunehmen und zu bewegen, wobei die Vakuum-Sauggreifer in Gruppen ansteuer- bzw. aktivierbar sind,
wobei die Vorrichtung eine räumlich getrennte dritte (41; 42; 43) und vierte Bearbeitungsstation (41; 42; 43) mit einem Bearbeitungswerkzeug aufweist, denen mit der Roboterbaugruppe (6) ein Werkstück zuführbar ist.

2. Vorrichtung (1; 30; 40) nach Anspruch 1, **dadurch gekennzeichnet, dass** die Roboterbaugruppe (6) zwei Roboter mit jeweils einer Werkstückaufnahme zum Halten eines Werkstücks aufweist, wobei die Roboterbaugruppe bevorzugt eingerichtet ist, die mindestens zwei Werkstücke mit den Werkstückaufnahmen der Roboter unabhängig voneinander aufzunehmen und abzulegen.

3. Vorrichtung (1; 30; 40) nach einem der Ansprüche 1 bis 2, **dadurch gekennzeichnet, dass** mindestens eine der Bearbeitungsstationen (3; 4; 41; 42; 43) eine Vorschubeinrichtung (25) zum Herbeiführen einer Relativbewegung zwischen einem Werkstück und dem Bearbeitungswerkzeug der Station zur Werkstückbearbeitung aufweist.

4. Vorrichtung (1; 30; 40) nach einem der Ansprüche 1 bis 3, **dadurch gekennzeichnet, dass** eine, bevorzugt zwei, besonders bevorzugt alle Bearbeitungswerkzeuge der Bearbeitungsstationen (3; 4; 41; 42; 43) stationär angeordnet sind.

5. Vorrichtung (1; 30; 40) nach einem der vorhergehenden Ansprüche, bei der die Bearbeitungsstationen (3; 4; 41; 42; 43) auf einem Kreis um bevorzugt ein Zentrum der Roboterbaugruppe (6) und bevorzugt kreissymmetrisch zueinander angeordnet sind.

6. Verfahren (1; 30; 40) zum Bearbeiten eines Werkstücks, das bevorzugt zumindest abschnittsweise aus Holz, Holzwerkstoffen, Kunststoff oder dergleichen besteht, unter Verwendung einer Vorrichtung (1; 30; 40) nach einem der vorhergehenden Ansprüche, umfassend in dieser Reihenfolge
Aufnehmen eines ersten Werkstücks (15a) mit einer Roboterbaugruppe (6),
wobei die Roboterbaugruppe einen Roboter (6) mit einer Werkstückaufnahmetraverse (18) aufweist, die an deren Unterseite Vakuum-Sauggreifer aufweist, wobei der Roboter derart ausgestaltet und/oder eingerichtet ist, dass der Roboter mit den Vakuum-Sauggreifern in der Lage ist, zwei Werkstücke gleichzeitig aufzunehmen und zu bewegen, wobei die Vakuum-Sauggreifer in Gruppen ansteuer- bzw. aktivierbar sind,
Aufnehmen eines zweiten Werkstücks (15b), bevorzugt von einer ersten Bearbeitungsstation (3), mit der Roboterbaugruppe, Übergeben des ersten Werkstücks (15a) an eine erste Bearbeitungsstation (3), die ein Bearbeitungswerkzeug aufweist.

7. Verfahren nach Anspruch 6 mit ferner den Schritten Bearbeiten des ersten Werkstücks (15a) in der ersten Bearbeitungsstation (3) mit dem Bearbeitungswerkzeug, Zuführen, bevorzugt zumindest teilweise zeitparallel, des zweiten Werkstücks (15b) zu einer zweiten Bearbeitungsstation (4), die ein Bearbeitungswerkzeug aufweist, mit der Roboterbaugruppe (6).

8. Verfahren nach Anspruch 7 mit ferner Bearbeiten des ersten Werkstücks (15a) in der ersten Bearbeitungsstation (3), indem mit einer Vorschubeinrichtung (25) der ersten Bearbeitungsstation eine Relativbewegung zwischen dem Bearbeitungswerkzeug der ersten Bearbeitungsstation und dem ersten Werkstück (15a) herbeigeführt wird.

## Claims

1. Device (1; 30; 40) for machining a workpiece which preferably consists at least partially of wood, wood-based materials, plastic or the like, with:
a first machining station (3) with a machining tool for machining a workpiece,
a second machining station (4), spatially separate from the first, with a machining tool for machining a workpiece,
a robot assembly (6) for feeding a workpiece to the first (3) and second (4) machining station, wherein the robot assembly (6) is designed and preferably configured to hold at least two workpieces (15a, 15b) simultaneously,
wherein the robot assembly has a robot (6) with a workpiece pick-up traverse (18) which has vacuum suction cups on its underside, wherein the robot is designed and/or configured in such a way that the robot with the vacuum suction cups is able to pick up and move two workpieces simultaneously, wherein the vacuum suction cups can be actuated or activated in groups,
wherein the device has a spatially separate third (41; 42; 43) and fourth (41; 42; 43) machining station with a machining tool to which a workpiece can be fed by means of the robot assembly (6).

2. Device (1; 30; 40) according to claim 1, **characterised in that** the robot assembly (6) has two robots, each with a workpiece pick-up for holding a workpiece, wherein the robot assembly is preferably configured to pick up and set down the at least two workpieces independently of one another by means of the workpiece pick-ups of the robots.

3. Device (1; 30; 40) according to one of the claims 1 to 2, **characterised in that** at least one of the machining stations (3; 4; 41; 42; 43) has a feed device (25) for bringing about a relative movement between a workpiece and the machining tool of the station in order to machine the workpiece.

4. Device (1; 30; 40) according to one of the claims 1 to 3, **characterised in that** one, preferably two, particularly preferably all machining tools of the machining stations (3; 4; 41; 42; 43) are arranged in a stationary manner.

5. Device (1; 30; 40) according to one of the preceding claims, wherein the machining stations (3; 4; 41; 42; 43) are arranged in a circle, preferably around a centre of the robot assembly (6), and preferably in a circularly symmetrical manner in relation to each other.

6. Method (1; 30; 40) for machining a workpiece which preferably consists at least partially of wood, wood-based materials, plastic or the like using a device (1; 30; 40) according to one of the preceding claims, comprising, in this sequence,
picking up a first workpiece (15a) by means of a robot assembly (6),
wherein the robot assembly has a robot (6) with a workpiece pick-up traverse (18) which has vacuum suction cups on its underside, wherein the robot is designed and/or configured in such a way that the robot with the vacuum suction cups is able to pick up and move two workpieces simultaneously, wherein the vacuum suction cups can be actuated or activated in groups,
picking up a second workpiece (15b), preferably from a first machining station (3), by means of the robot assembly,
handing over the first workpiece (15a) to a first machining station (3) which has a machining tool.

7. Method according to claim 6 with the further steps
machining the first workpiece (15a) in the first machining station (3) with the machining tool,
preferably at least partially simultaneously, feeding the second workpiece (15b) to a second machining station (4) which has a machining tool by means of the robot assembly (6).

8. Method according to claim 7, further including machining the first workpiece (15a) in the first machining station (3) in that a relative movement between the machining tool of the first machining station and the first workpiece (15a) is brought about by means of a feed device (25) of the first machining station.

## Revendications

1. Dispositif (1 ; 30 ; 40) pour l'usinage d'une pièce à usiner, qui se compose de préférence au moins par sections de bois, de matériaux dérivés du bois, de matière plastique ou similaires, avec :
une première station d'usinage (3) avec un outil d'usinage pour l'usinage d'une pièce à usiner,
une deuxième station d'usinage (4) séparée dans l'espace de la première avec un outil d'usinage pour l'usinage d'une pièce à usiner,
un bloc robotisé (6) pour la fourniture d'une pièce à usiner aux première (3) et deuxième stations d'usinage (4), dans lequel le bloc robotisé (6) est agencé et de préférence conçu afin de maintenir simultanément au moins deux pièces à usiner (15a, 15b),
dans lequel le bloc robotisé présente un robot (6) avec une traverse de réception de pièce à usiner (18) qui présente au niveau de son côté inférieur des ventouses à vide, dans lequel le robot est agencé et/ou conçu de telle manière que le robot est en mesure avec les ventouses à vide de recevoir et de déplacer deux pièces à usiner simultanément, dans lequel les ventouses à vide peuvent être commandées ou activées en groupes,
dans lequel le dispositif présente une troisième (41 ; 42 ; 43) et quatrième station d'usinage (41 ; 42 ; 43) séparées dans l'espace avec un outil d'usinage, auxquelles une pièce à usiner peut être fournie avec le bloc robotisé (6).

2. Dispositif (1 ; 30 ; 40) selon la revendication 1, **caractérisé en ce que** le bloc robotisé (6) présente deux robots avec respectivement un logement de pièce à usiner pour le maintien d'une pièce à usiner, dans lequel le bloc robotisé est conçu de préférence afin de recevoir et déposer les au moins deux pièces à usiner avec les logements de pièce à usiner des robots indépendamment l'une de l'autre.

3. Dispositif (1 ; 30 ; 40) selon l'une quelconque des revendications 1 à 2, **caractérisé en ce qu'**au moins l'une des stations d'usinage (3 ; 4 ; 41 ; 42 ; 43) présente un dispositif d'avance (25) pour provoquer un mouvement relatif entre une pièce à usiner et l'outil d'usinage de la station pour l'usinage d'une pièce à usiner.

4. Dispositif (1 ; 30 ; 40) selon l'une quelconque des revendications 1 à 3, **caractérisé en ce qu'**un, de préférence deux, de manière particulièrement préférée tous les outils d'usinage des stations d'usinage (3 ; 4 ; 41 ; 42 ; 43) sont disposés de manière stationnaire.

5. Dispositif (1 ; 30 ; 40) selon l'une quelconque des revendications précédentes, pour lequel les stations d'usinage (3 ; 4 ; 41 ; 42 ; 43) sont disposées sur un cercle de préférence autour d'un centre du bloc robotisé (6) et de préférence de manière symétrique circulairement les unes aux autres.

6. Procédé (1 ; 30 ; 40) pour l'usinage d'une pièce à usiner qui se compose de préférence au moins par sections de bois, de matériaux dérivés du bois, de matière plastique ou similaire, en utilisant un dispositif (1; 30 ; 40) selon l'une quelconque des revendications précédentes, comprenant dans cet ordre
la réception d'une première pièce à usiner (15a) avec un bloc robotisé (6),
dans lequel le bloc robotisé présente un robot (6) avec une traverse de réception de pièce à usiner (18) qui présente au niveau de son côté inférieur des ventouses à vide, dans lequel le robot est agencé et/ou conçu de telle manière que le robot est en mesure avec les ventouses à vide de recevoir et de déplacer deux pièces à usiner simultanément, dans lequel les ventouses à vide peuvent être commandées ou activées en groupes,
la réception d'une seconde pièce à usiner (15b), de préférence d'une première station d'usinage (3), avec le bloc robotisé,
la remise de la première pièce à usiner (15a) à une première station d'usinage (3) qui présente un outil d'usinage.

7. Procédé selon la revendication 6 comprenant en outre les étapes
l'usinage de la première pièce à usiner (15a) dans la première station d'usinage (3) avec l'outil d'usinage,
la fourniture, de préférence au moins partiellement parallèle dans le temps, de la seconde pièce à usiner (15b) à une deuxième station d'usinage (4) qui présente un outil d'usinage, avec le bloc robotisé (6).

8. Procédé selon la revendication 7 comprenant en outre l'usinage de la première pièce à usiner (15a) dans la première station d'usinage (3), en ce qu'avec un dispositif d'avance (25) de la première station d'usinage un mouvement relatif est provoqué entre l'outil d'usinage de la première station d'usinage et la première pièce à usiner (15a).
